**Europäisches Patentamt**

(19) **European Patent Office**

**Office européen des brevets**

(11) Publication number : **0 323 976 B1**

(12) # EUROPEAN PATENT SPECIFICATION

(45) Date of publication of patent specification :
**12.08.92 Bulletin 92/33**

(51) Int. Cl.⁵ : **B62D 53/06,** // B60D1/14,
B60P3/055

(21) Application number : **87906385.7**

(22) Date of filing : **23.09.87**

(86) International application number :
**PCT/AU87/00327**

(87) International publication number :
**WO 88/02327 07.04.88 Gazette 88/08**

(54) **TRAILERS.**

(30) Priority : **23.09.86 AU 8155/86**

(43) Date of publication of application :
**19.07.89 Bulletin 89/29**

(45) Publication of the grant of the patent :
**12.08.92 Bulletin 92/33**

(84) Designated Contracting States :
**AT BE CH DE FR GB IT LI LU NL SE**

(56) References cited :
**EP-A- 1 868 886**
**AU-B- 4 767 559**
**CA-A- 1 051 938**
**FR-A- 1 091 001**

(56) References cited :
**GB-A- 2 068 865**
**GB-A- 2 158 024**
**GB-A- 5 158 025**
**GB-B- 1 516 579**

(73) Proprietor : **A.S.T. Pty. Ltd.**
**360 Highett Road**
**Highett, 3190 Victoria (AU)**

(72) Inventor : **FAIRWEATHER, Warren, Graham**
**36 Scott Street**
**Beaumaris, VIC 3193 (US)**

(74) Representative : **Knott, Stephen Gilbert et al**
**MATHISEN, MACARA & CO. The Coach House**
**6-8 Swakeleys Road**
**Ickenham Uxbridge Middlesex UB10 8BZ (GB)**

## Description

The present invention relates to trailers.

The haulage of bulky, but delicate equipment such as an antenna for a satellite transmitting/receiving station, presents difficulties when using a conventional trailer to carry the load. The suspension system of a conventional tandem axled semi-trailer or of a fully towed trailer cannot adequately handle loads of this nature and great care must be exercised when driving the prime mover to ensure that the load is not damaged during transit.

A requirement accordingly exists for a trailer which can handle bulky loads of a delicate or fragile nature.

CA-A-1 051 938 proposes a pneumatic lifting system comprising air bags between a trailer and a coupling for connecting the trailer to a prime mover. The air bags in this system are operative to raise and lower the front end of the trailer to permit loading and unloading and also to obtain a desired ground clearance in transit. While the air bags can act to provide a cushioning effect, only pitching movements in a vertical plane are absorbed. The air bags in this configuration cannot absorb rolling movements and will not thereby act as a proper suspension system as would be required to permit the carriage of loads of a delicate or fragile nature.

According to the present invention, there is provided a trailer comprising a load-carrying chassis having a forward end, a support assembly at the forward end of the chassis for coupling the trailer to a prime mover, mounting means for connecting the support assembly to the chassis, said mounting means being at the rear of the support assembly and comprising a pivot mounting which mounts the support assembly for swinging movement in a vertical plane about a horizontal axis, and a pneumatic suspension system acting between the support assembly and the chassis, said pneumatic suspension system comprising at least one air bag characterised in that the pivot mounting also mounts the support assembly for rolling movement about a longitudinal axis perpendicular to the horizontal axis, and there is at least one said air bag at each side of the longitudinal axis and forwardly of said horizontal axis, said air bags being interposed between the support assembly and a structure rigid with the chassis and positioned above the support assembly.

Embodiments of the invention will now be described, by way of example only, with reference to the accompanying drawings, in which:

Figure 1 is a schematic perspective view of a goose-neck at the front of a semi-trailer in accordance with an embodiment of the invention;
Figure 2 is a schematic side view equivalent to Figure 1;
Figures 3 to 5 are schematic front views illustrating the operation of the suspension for the goose-neck;
Figure 6 is a side elevation of a fully towed trailer in accordance with another embodiment of this invention;
Figure 7 is an end view of the trailer of Figure 6; and
Figure 8 is a plan view of the trailer of Figure 6.

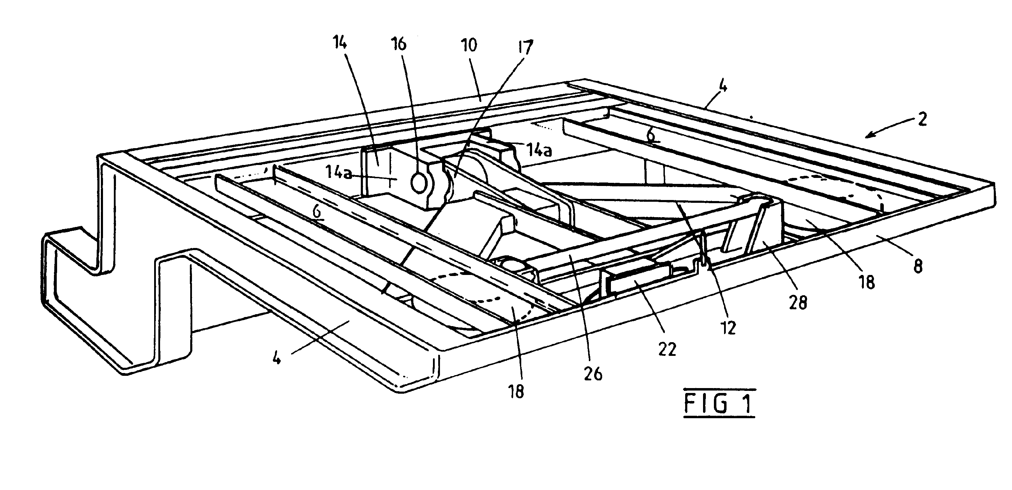

With reference to Figures 1 to 5, a tandem axle semi-trailer comprises a rigid chassis which forms, at its forward end, a goose-neck 2. The goose-neck 2 is defined by longitudinal chassis rails 4 which are spaced laterally by substantially the full width of the trailer so that the two rails 4 lie at the sides of the trailer, rather than being offset inwardly from the sides as is conventional. Longitudinal beams 6 of channel-section extend inwardly of the side rails between transverse rails 8, 10 at the front and rear of the goose-neck 2.

A skid plate 12 of generally triangular form and constructed at least partly from components of channel section is pivotally mounted from the rear transverse rail 10 by means of a bearing block 14 bolted to the rail. The block comprises opposed wings 14a which support opposite ends of a lateral bearing shaft via rubber bushes 16. A bearing sleeve 17 at the rear of the skid plate 12 is journalled on the bearing shaft whereby the skid plate 12 is pivotal about the axis of the shaft so as to be capable of a pitching movement. The rubber bushes 16 also permit oscillation of the shaft about a longitudinal axis perpendicular to the axis of the shaft, whereby skid plate 12 is also able to pivot or roll to a limited extent about a longitudinal axis. The skid plate 12 is thus capable of limited universal movement relative to the goose-neck 2. Air bags 18 composed of an airtight, strong, flexible material are interposed between the skid plate 12 and the channel-section beams 6 at the front of the goose-neck 2.

The skid plate 12 is adapted to rest on, and engage, the turntable 20 of the prime mover in a conventional manner so that the goose-neck 2 is suspended from the turntable via the air bags 18 and is capable of independent pitching and rolling movement.

The air bags 18 are connected via a control valve 22 to the pneumatic system of the prime mover. The control valve 22 is mounted on the goose-neck 2 and includes a sensor 24 responsive to the vertical position of the skid plate 12 relative to the goose-neck 2. The valve 22 acts to vary the inflation of the air bags 18 in relation to the load of the trailer as determined by the vertical deflection of the goose-neck 2 relative to the skid plate 12, so as to maintain the goose-neck at a constant height relative to the skid plate. The valve 22 incorporates a delay function which ensures that the valve does not operate in response to momentary changes in dynamic loading when the trailer is moving, but rather, is responsive to changes in static loading. Such a valve is known per se.

A radius arm 26 extends laterally between the skid plate 12 and the goose-neck 2 at the front of the skid plate 12, the radius arm 26 being journalled at one end to a rubber bushing carried by a bracket 28 rigid with the skid plate 12, and being journalled at its opposite end to a rubber bushing carried by a bracket 30 rigid with the adjacent channel-section beam 6. The radius arm 26 stabilizes the goose-neck 2 against lateral movement relative to the skid plate 12, whilst permitting the relative universal movement discussed earlier.

If damping is required between the skid plate 12 and goose-neck 2, this can be achieved by means of conventional pneumatic or hydraulic shock absorbers.

The rear of the trailer chassis is suspended from the axle units by a conventional pneumatic suspension system.

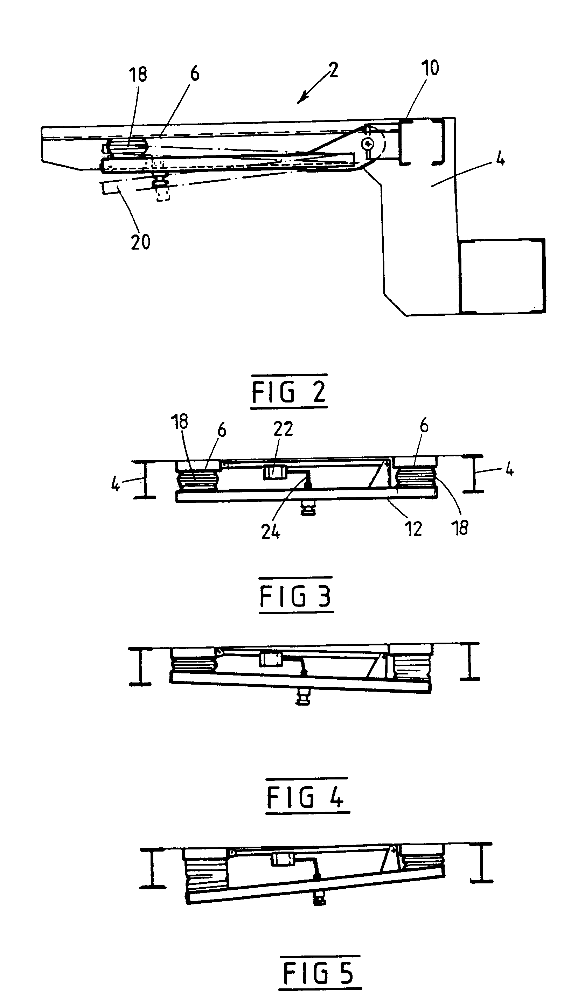

The pneumatic suspension for the goose-neck 2 is compactly arranged substantially within the height of the side rails 4 as shown in Figures 2 to 5. This means that the height of the goose-neck 2 does not need to be increased to accommodate the suspension, with the result that the centre of gravity of the trailer is not raised and the top of the goose-neck can be used as a load-carrying deck which is sufficiently low as to be usable with tall loads. The compact configuration of the pneumatic suspension for the goose-neck in conjunction with the placement of the side rails 4 at the edges of the trailer enables the rear of the prime mover to be located adjacent the rear transverse rail 10 of the goose-neck, with sufficient lateral room being provided to enable the prime mover to swing relative to the goose-neck during manoeuvering. The effect of this is to permit reduction in the length of the goose-neck. Trailers are subject to regulations which govern their overall length and reduction in the length of the goose neck permits increased length of the main load carrying platform within the overall maximum permitted length of the trailer.

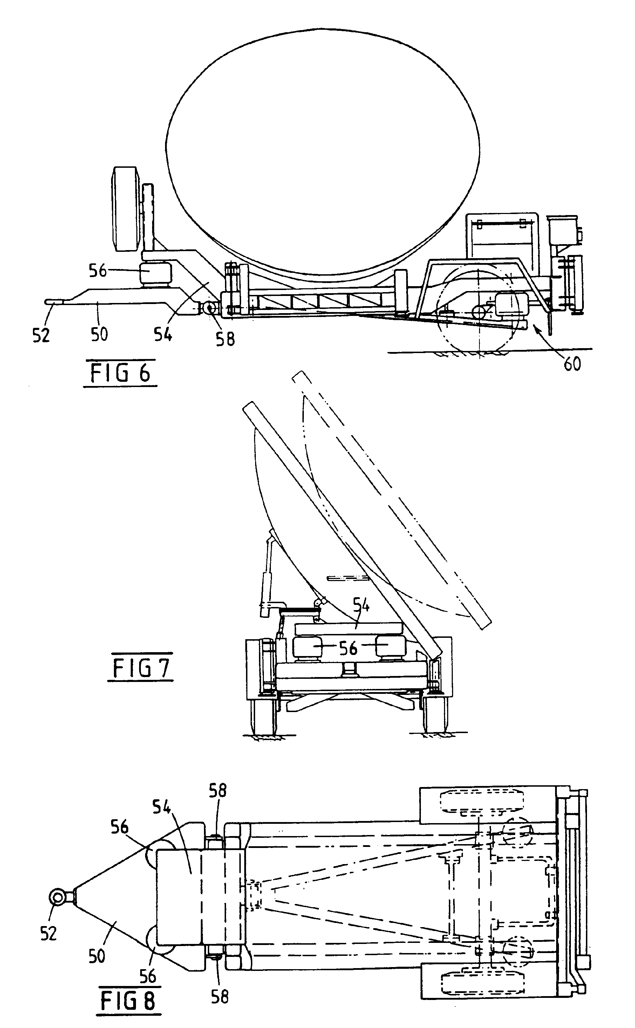

Figures 6 to 8 show a fully towed trailer comprising a drawbar frame 50 having a coupling 52 at its forward end for connection to a towing ball at the rear end of the prime mover whereby the drawbar frame is capable of universal pivotal movement relative to the prime mover. The drawbar frame 50 supports the goose-neck 54 of the trailer chassis via air bags 56 which are controlled in the same manner as described above. The drawbar frame 50 is pivoted at its rear end to the trailer chassis by opposed, aligned pivots 58 each located adjacent a respective side of the chassis whereby to permit the drawbar frame 50 to move relative to the chassis substantially only about the axis of the pivots, although the pivots may be carried within rubber bushings to permit a small amount of rolling movement.

The chassis is suspended from the rear axle of the trailer by means of a pneumatic suspension 60 (see Figure 6).

In the embodiments described, the pneumatic suspension system for the goose-neck provides, in conjunction with the pneumatic rear suspension, full suspension for the trailer and enables the trailer to be driven without damaging delicate loads carried by the trailer.

The embodiments have been described by way of example only and modifications may be made within the scope of the invention as defined in the claims.

## Claims

1. A trailer comprising a load-carrying chassis having a forward end, a support assembly (12; 50) at the forward end of the chassis for coupling the trailer to a prime mover, mounting means for connecting the support assembly to the chassis, said mounting means being at the rear of the support assembly (12; 50) and comprising a pivot mounting (14, 16, 17; 58) which mounts the support assembly (12; 50) for swinging movement in a vertical plane about a horizontal axis, and a pneumatic suspension system acting between the support assembly (12; 50) and the chassis, said pneumatic suspension system comprising at least one air bag (18; 56) characterised in that the pivot mounting (14, 16, 17; 58) also mounts the support assembly (12; 50) for rolling movement about a longitudinal axis perpendicular to the horizontal axis, and there is at least one said air bag (18) at each side of the longitudinal axis and forwardly of said horizontal axis, said air bags (18; 56) being interposed between the support assembly (12; 50) and a structure (2; 54) rigid with the chassis and positioned above the support assembly (12; 50).

2. A trailer according to claim 1, characterised in that the pivot mounting comprises resilient bushing means (16) mounted to the chassis with its axis extending transversely to the longitudinal axis of the chassis, and a lateral bearing shaft mounted at the rear end of the support assembly (12) and received within the bushing means (16) whereby to mount the support assembly for said swinging movement in a vertical plane, said bushing means (16) being deflectable by said shaft to permit said rolling movement of the support assembly (12) about said longitudinal axis.

3. A trailer according to claim 2 or claim 3, characterised in that the pneumatic suspension system further comprises valve means (22) for connecting the air bags (18) to a source of compressed air, and sensor means (24) responsive to the vertical position of the forward end of the chassis relative to the support assembly (12) to control the valve means (22) to alter the degree of inflation of the bags (18) so as to maintain the forward end of chassis at a substantially constant height.

4. A trailer according to any one of claims 1 to 3, characterised in that the trailer is a semi-trailer having a goose-neck (2) at its forward end and which forms said structure above the support assembly (12), and the support assembly (12) is a skid plate.

5. A trailer according to claim 4, characterised in that the goose-neck (2) comprises side rails (4) substantially at the lateral sides of the chassis, and the skid plate (12) lies substantially within the depth of the goose-neck, the pneumatic suspension system being interposed between the skid plate (12) and rigid support means (6) carried by the goose-neck (2) laterally inwardly of the side rails (4).

6. A trailer according to claim 4 or claim 5, characterised in that a lateral arm (26) extends between the goose-neck (2) and the forward end of the skid plate (12) to stabilise the forward end of the skid plate (20) against substantial lateral movement relative to the goose-neck (2).

7. A trailer according to any one of claims 1 to 3, characterised in that the trailer is a fully towed trailer, and the support assembly (50) comprises a drawbar assembly having a forward end adapted to be coupled to the prime mover so as to be capable of limited universal pivotal movement relative to the prime mover.

## Patentansprüche

1. Auflieger mit einem lasttragenden Fahrgestell, das ein Vorderende aufweist, einer Stützanordnung (12; 50) am Vorderende des Fahrgestells zur Kopplung des Aufliegers an eine Zugmaschine, Befestigungsmitteln zur Verbindung der Stützanordnung mit dem Fahrgestell, wobei sich jene Befestigungsmittel hinten an der Stützanordnung (12; 50) befinden und eine Schwenkbefestigung (14, 16, 17; 58) aufweisen, mittels derer die Stützanordnung (12; 50) in einer vertikalen Ebene um eine horizontale Achse schwingen kann, und einer zwischen der Stützanordnung (12; 50) und dem Fahrgestell wirkenden pneumatischen Aufhängung, die mindestens einen Luftsack (18; 56) aufweist, dadurch gekennzeichnet, daß mittels der Schwenkbefestigung (14, 16, 17; 58) die Stützanordnung (12; 50) auch um eine zur horizontalen Achse senkrechte Längsachse rollen kann, und daß sich auf jeder Seite der Längsachse und vor jener horizontalen Achse mindestens einer jener Luftsäcke (18) befindet, wobei jene Luftsäcke (18; 56) zwischen der Stützanordnung (12; 50) und einer Struktur (2; 54) liegen, die fest mit dem Fahrgestell verbunden ist und sich über der Stützanordnung (12; 50) befindet.

2. Auflieger nach Anspruch 1, dadurch gekennzeichnet, daß die Schwenkbefestigung ein am Fahrgestell befestigtes elastisches Buchsenmittel (16), dessen Achse sich quer zur Längsachse des Fahrgestells erstreckt, und eine seitliche Lagerwelle aufweist, die am hinteren Ende der Stützanordnung (12) befestigt ist und im Buchsenmittel (16) aufgenommen wird, wodurch die Stützanordnung so befestigt ist, daß sie jene Schwingbewegung in einer vertikalen Ebene ausführen kann, wobei jenes Buchsenmittel (16) durch jene Welle ausgelenkt werden kann, so daß die Stützanordnung (12) um jene Längsachse rollen kann.

3. Auflieger nach Anspruch 2 oder 3, dadurch gekennzeichnet, daß die pneumatische Aufhängung weiterhin ein Ventilmittel (22), das die Luftsäcke (18) mit einer Druckluftquelle verbindet, und ein Sensormittel (24) aufweist, das auf die vertikale Position des Vorderendes des Fahrgestells bezüglich der Stützanordnung (12) reagiert, um das Ventilmittel (22) so zu steuern, daß es den Grad der Luftbefüllung der Säcke (18) ändert, um so das Vorderende des Fahrgestells auf einer im wesentlichen konstanten Höhe zu halten.

4. Auflieger nach einem der Ansprüche 1 bis 3, dadurch gekennzeichnet, daß es sich bei dem Auflieger um einen Sattelauflieger handelt, der an seinem Vorderende einen Schwanenhals (2) aufweist, der jene Struktur über der Stützanordnung (12) bildet, und daß es sich bei der Stützanordnung (12) um einen Unterzug handelt.

5. Auflieger nach Anspruch 4, dadurch gekennzeichnet, daß der Schwanenhals (2) im wesentlichen an den Seiten des Fahrgestells liegende Seitenschienen (4) aufweist und daß der Unterzug (12) im wesentlichen in der Tiefe des Schwanenhalses liegt, wobei die pneumatische Aufhängung zwischen dem Unterzug (12) und steifen Stützmitteln (6) liegt, die der Schwanenhals (2) innen an der Seite der Seitenschienen (4) trägt.

6. Auflieger nach Anspruch 4 oder 5, dadurch gekennzeichnet, daß sich zwischen dem Schwanenhals (2) und dem Vorderende des Unterzugs (12) ein seitlicher Arm (26) erstreckt, der das Vorderende des Unterzugs (12) gegenüber wesentlichen seitlichen Bewegungen hinsichtlich des Schwanenhalses (2) stabilisiert.

7. Auflieger nach einem der Ansprüche 1 bis 3, dadurch gekennzeichnet, daß es sich bei dem Auflieger um ein Vollanhängefahrzeug handelt und daß die Stützanordnung (50) eine Zuggabelanordnung mit einem Vorderende aufweist, das so an die Zugmaschine gekoppelt werden kann, daß beschränkte Universalschwenkbewegungen hinsichtlich der Zugmaschine möglich sind.

## Revendications

1. Remorque comportant un châssis porteur muni d'une partie avant, un ensemble d'appui (12; 50) à la partie avant du châssis pour l'attelage de la remorque à un camion tracteur, un moyen d'assemblage reliant l'ensemble d'appui au châssis, ledit moyen d'assemblage se trouvant à l'arrière de l'ensemble d'appui (12; 50) et comprenant un support pivotant (14, 16, 17; 58) permettant à l'ensemble d'appui (12; 50) d'osciller dans un plan vertical autour d'un axe horizontal, et un système de suspension pneumatique agissant entre l'ensemble d'appui (12; 50) et le châssis, ledit système de suspension pneumatique comportant au moins un coussin pneumatique (18; 56) caractérisé en ce que l'assemblage à pivot (14, 16, 17; 58) permet également un mouvement de roulement de l'ensemble d'appui (12; 50) autour d'un axe longitudinal perpendiculaire à l'axe horizontal, et qu'un coussin pneumatique (18) au moins est placé de chaque côté de l'axe longitudinal et en avant dudit axe horizontal, lesdits coussins pneumatiques (18; 56) étant interposés entre l'ensemble d'appui (12; 50) et une structure (2; 54) fixée de manière rigide au châssis et positionnée au-dessus de l'ensemble d'appui (12; 50).

2. Remorque selon la revendication 1, caractérisée en ce que le support pivotant comprend un moyen à douille résiliente (16) monté sur le châssis, dont l'axe s'étend transversalement par rapport à l'axe longitudinal du châssis, et un bras de support latéral monté à la partie arrière de l'ensemble d'appui (12) supporté par le moyen à douille résiliente (16), pour permettre à l'ensemble d'appui d'osciller dans un plan vertical, ledit moyen à douille résiliente (16) pouvant être défléchi par ledit bras pour permettre ledit mouvement d'oscillation de l'ensemble d'appui (12) autour dudit axe longitudinal.

3. Remorque selon la revendication 2 ou 3, caractérisée en ce que le système de suspension pneumatique comprend en outre une valve (22) reliant les coussins pneumatiques (18) à une source d'air comprimé, et un moyen de détection (24) sensible à la position verticale de la partie avant du châssis par rapport à l'ensemble d'appui (12), contrôlant la valve (22) afin de varier la quantité d'air dans les coussins pneumatiques (18) pour maintenir la partie avant du châssis à une hauteur substantiellement constante.

4. Remorque selon l'une ou l'autre des revendications 1 à 3, caractérisée en ce que la remorque est une semi-remorque munie d'un col de cygne (2) à sa partie avant, et qui forme ladite structure au-dessus de l'ensemble d'appui (12), et que l'ensemble d'appui (12) est une plaque de protection.

5. Remorque selon la revendication 4, caractérisée en ce que le col de cygne (2) comporte des longerons (4) placés substantiellement sur les côtés latéraux du châssis, et que la plaque de protection (12) est substantiellement comprise à l'intérieur du col de cygne, le système de suspension pneumatique étant interposé entre la plaque de protection (12) et les moyens de support rigides (6) du col de cygne (2) placés latéralement entre les longerons (4).

6. Remorque selon la revendication 4 ou 5, caractérisée en ce qu'un bras transversal (26) relie le col de cygne (2) et la partie avant de la plaque de protection (12) afin de stabiliser la partie avant de la plaque de protection (12) et empêcher un mouvement latéral important par rapport au col de cygne (2).

7. Remorque selon l'une ou l'autre des revendications 1 à 3, caractérisée en ce que la remorque est une remorque entièrement tractée, et que l'ensemble d'appui (50) comprend une barre d'attelage pourvue d'une partie avant adaptée pour être accouplée au camion tracteur, de manière à pouvoir pivoter librement de façon limitée par rapport au camion tracteur.

FIG 1

FIG 2

FIG 3

FIG 4

FIG 5

56

52    50      54      58

60

## FIG 6

54

56

## FIG 7

58

54

56

52

50

56

58

## FIG 8